# EUROPÄISCHE PATENTSCHRIFT

(11) **EP 2 720 775 B1**
(45) Veröffentlichungstag und Bekanntmachung des Hinweises auf die Patenterteilung: **28.08.2019**
(21) Anmeldenummer: 12728242.4
(22) Anmeldetag: 14.06.2012
(51) Int. Cl.: F02M 35/024, B01D 46/24, B01D 46/52, B01D 46/00

(54) **FILTERELEMENT**
FILTER ELEMENT
ÉLÉMENT FILTRANT

(30) Priorität: 17.06.2011 DE 102011077712
(43) Veröffentlichungstag der Anmeldung: 23.04.2014
(73) Patentinhaber: Mahle International GmbH, 70376 Stuttgart (DE)
(72) Erfinder: KAISER, Sven Alexander, 71364 Winnenden (DE)
(74) Vertreter: BRP Renaud & Partner mbB Rechtsanwälte Patentanwälte Steuerberater
(86) Internationale Anmeldenummer: PCT/EP2012/061351
(87) Internationale Veröffentlichungsnummer: WO 2012/172017

(56) Entgegenhaltungen:
- EP-A1- 1 163 944
- EP-A1- 2 571 596
- WO-A1-02/053258
- DE-U1-202005 003 046
- US-A- 3 740 931

## Beschreibung

Die vorliegende Erfindung betrifft ein Filterelement für eine Filtereinrichtung zum Filtern eines Fluids.

Filtereinrichtungen kommen bspw. bei Kraftfahrzeugen zur Verwendung. Insbesondere kann es sich hierbei um Luftfiltereinrichtungen handeln. Darin kommt ein als Luftfilter ausgestaltetes Filterelement zum Einsatz.

Für unterschiedliche Anwendungen kann bei Fahrzeugen sog. Sekundärluft benötigt werden. Bspw. kann eine Abgasanlage mit einem Zusatzbrenner ausgestattet sein, um während einer Warmlaufphase Abgasreinigungskomponenten auf deren Betriebstemperatur aufzuheizen. Zweckmäßig wird als Sekundärluft gereinigte Luft verwendet. Um hierbei den Betrieb der Brennkraftmaschine möglichst wenig zu beeinträchtigen, ist es zweckmäßig, die Sekundärluft stromauf eines Luftmassensensors abzuziehen, also insbesondere bereits unmittelbar an der Luftfiltereinrichtung. Um dennoch den Luftmassensensor möglichst nah am Filterelement positionieren zu können, ist ein vergleichsweise hoher Aufwand zur Realisierung des Sekundärluftanschlusses erforderlich.

Dokument DE 20 2005 003046 U1 offenbart ein Filterelement mit einem ringförmigen Filterkörper mit einem Hauptanschluss und mit einen Sekundärstutzen um den Sekundärluft-Anschluss an den Ansauggeräuschdämpfer zu ermöglichen.

Die vorliegende Erfindung beschäftigt sich mit dem Problem, für ein Filterelement der eingangs genannten Art eine verbesserte oder zumindest eine andere Ausführungsform anzugeben, die sich insbesondere dadurch auszeichnet, dass bei einer Verwendung als Luftfilter die Realisierung eines Sekundärluftanschlusses vereinfacht ist.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, bei einem Filterelement, das einen ringförmigen Filterkörper aufweist und mit einem Hauptanschluss ausgestattet ist, der mit einem vom Filterkörper umschlossenen Innenraum fluidisch verbunden ist, den Filterkörper mit einem Kanal auszustatten, der sich in der Ringkontur des Filterkörpers axial erstreckt, und im Bereich dieses Kanals einen Nebenanschluss anzuordnen, der ebenfalls mit dem Innenraum fluidisch verbunden ist. Durch den Kanal wird am Filterkörper ein Bereich geschaffen, der sich zur Anordnung des Nebenanschlusses eignet, wodurch entlang des Filterkörpers ein vergleichsweise großer Spielraum für die Positionierung des Nebenanschlusses gegeben ist. Die gestalterische Freiheit zur Realisierung bspw. eines Sekundärluftanschlusses an der mit dem Filterelement ausgestatteten Filtereinrichtung wird dadurch verbessert. Der Kanal ist radial einseitig offen und unterbricht die durch das ringförmig angeordnete Filtermaterial gebildete Ringkontur des Filterkörpers in der Umfangsrichtung. Hierdurch erfolgt die Integration des Kanals in den Filterkörper, ohne die Ringkontur des Filterkörpers zu verlassen. Somit kann das Filterelement bspw. anstelle eines herkömmlichen Filterelements montiert werden, um eine Möglichkeit für einen Sekundärluftanschluss zu schaffen.

Über den Nebenanschluss ist es möglich, dem Innenraum parallel zum Hauptanschluss gereinigtes Gas, also vorzugsweise gereinigte Luft abzuziehen, wodurch es weiter möglich ist, einen Luftmassensensor sehr nahe am Hauptanschluss anzuordnen. Die Sekundärluft wird dabei über den Nebenanschluss abgezogen.

Zweckmäßig kann der Nebenanschluss durch den Kanal mit dem Innenraum fluidisch verbunden sein. In diesem Fall ist der Kanal zweckmäßig radial nach innen, also zum Innenraum hin offen und führt dem Nebenanschluss das reinseitige Gas zu.

Der Hauptanschluss und der Nebenanschluss können zweckmäßig an derselben Endscheibe ausgebildet sein. Bei einer derartigen Ausführungsform kann der Hauptanschluss bspw. durch eine zentrale Öffnung der Endscheibe gebildet sein. Die Endscheibe ist dann als zentral offene Endscheibe konfiguriert. Eine andere Endscheibe des Filterelements, die den Filterkörper gegenüber der offenen Endscheibe axial begrenzt, ist dann zweckmäßig als geschlossene Endscheibe ausgestaltet. Der Nebenanschluss ist bzgl. einer Längsmittelachse des ringförmigen Filterkörpers exzentrisch an der offenen Endscheibe ausgebildet. Sofern der Kanal radial nach innen, also zum Innenraum hin offen ist, kann der Nebenanschluss zweckmäßig an einer den Filterkörper axial begrenzenden Endscheibe ausgebildet sein und durch die Endscheibe hindurch axial mit dem Kanal fluidisch verbunden sein. Hierdurch können Nebenanschluss und Hauptanschluss axial orientiert sein und bspw. als Steckverbindungen ausgestaltet sein. Dabei können Nebenanschluss und Hauptanschluss an voneinander abgewandten Endscheiben ausgebildet sein. Ebenso können Hauptanschluss und Nebenanschluss an derselben Endscheibe ausgebildet sein.

Gemäß einer anderen Ausführungsform kann der Nebenanschluss axial zwischen Längsenden des Kanals durch einen den Innenraum begrenzenden Kanalboden hindurch radial mit dem Innenraum fluidisch verbunden sein. Hierdurch steht die gesamte axiale Länge des Kanals für die gewünschte Positionierung des Nebenanschlusses zur Verfügung.

Entsprechend einer Weiterbildung kann der Nebenanschluss ein vom Kanalboden entferntes Anschlussende aufweisen, das radial orientiert ist. Hierdurch kann der Nebenanschluss besonders einfach als gerader Stutzen ausgestaltet sein.

Alternativ dazu kann der Nebenanschluss ein vom Kanalboden entferntes Anschlussende aufweisen, das axial orientiert ist. In diesem Fall ist der Nebenanschluss als Winkelstutzen konfiguriert.

Gemäß einer alternativen Ausführungsform kann der Kanal radial nach außen, also zur Umgebung hin offen sein. Dadurch ist es bspw. möglich, den Nebenanschluss im Kanal radial versenkt anzuordnen. Zweckmäßig kann das Anschlussende durch eine Aussparung axial hindurchgeführt sein, die in einer den Filterkörper axial begrenzenden Endscheibe ausgebildet ist. Somit wird hier auch für den Nebenanschluss ein axial orientierter Anschluss realisiert, wobei gleichzeitig der Nebenanschluss radial mit dem Innenraum verbunden ist und dadurch axial von der Endscheibe beabstandet mit dem Innenraum kommuniziert. Dies kann von Vorteil sein, um Wechselwirkungen mit einem Luftmassensensor, der nahe am Hauptanschluss positioniert ist, zu reduzieren.

Insbesondere kann somit die mit der Aussparung versehene Endscheibe als offene Endscheibe konfiguriert sein und zentral den Hauptanschluss aufweisen. Die gegenüberliegende zweite Endscheibe ist dann als geschlossene Endscheibe ausgestaltet.

Sofern der Nebenanschluss und der Hauptanschluss an verschiedenen Endscheiben ausgebildet sind, besitzt der Nebenanschluss einen maximalen Abstand vom Hauptanschluss, wodurch negative Einflüsse auf die Luftmassenmessung minimiert sind.

Bei einer speziellen Ausführungsform kann der Kanal unmittelbar durch das Filtermaterial gebildet sein. Bspw. kann das Filtermaterial durch ein gefaltetes Bahnenmaterial gebildet sein. Die Endfalten können flächig aneinander liegen und tangential bzgl. eines um die Längsmittelachse des Filterkörpers verlaufenden Kreises orientiert sein. Die so miteinander verbundenen Endfalten können dann einen Kanalboden des Kanals bilden.

Bei einer anderen Ausführungsform kann der Kanal durch einen Kanalkörper gebildet sein, der ein radial offenes Querschnittsprofil besitzt. Hierdurch wird für den Kanal eine erhöhte Formstabilität erreicht, was die Unterbringung und Anordnung des Nebenanschlusses vereinfacht.

Bspw. kann der Nebenanschluss durch den Kanalkörper hindurch radial mit dem Innenraum fluidisch verbunden sein. Des Weiteren kann das Filtermaterial den Kanalkörper an einer dem Innenraum zugewandten Innenseite auskleiden oder an einer vom Innenraum abgewandten Außenseite umschließen. Des Weiteren ist es möglich, dass das Filtermaterial mit dem Kanalkörper auf Stoß angeordnet ist, sodass der Kanalkörper im Stoß zwischen den Umfangsenden des Filtermaterials angeordnet ist. Ebenso können Endfalten des gefalteten Filtermaterials voneinander beabstandet am Kanalkörper befestigt sein, insbesondere durch Verklipsen, Verkleben oder Verschweißen. In diesen Fällen bildet der Kanalkörper eine Unterbrechung des Filtermaterials in der Umfangsrichtung.

Gemäß einer anderen vorteilhaften Ausführungsform kann der Kanalkörper integral an einer Innenzarge ausgeformt sein, an der sich das Filtermaterial radial innen abstützt. Zusätzlich oder alternativ kann der Kanalkörper integral an einer Endscheibe des Filterelements ausgeformt sein, die den Filterkörper axial begrenzt.

Durch die integrale Bauweise vereinfacht sich die Herstellung des Filterelements mit Kanal.

Bei einer anderen Ausführungsform kann der Nebenanschluss als Anschlussstutzen ausgeformt sein, der integral am Kanalkörper ausgeformt sein kann oder der als separates Bauteil ausgestaltet sein kann, das dann an den Kanalkörper oder an das Filtermaterial angebaut ist.

Gemäß einer anderen vorteilhaften Ausführungsform handelt es sich beim Filtermaterial um ein gefaltetes Bahnenmaterial, wobei dann der Kanal zweckmäßig im Bereich von Endfalten des Filtermaterials angeordnet ist.

Der Kanal verfügt vorzugsweise über ein Querschnittsprofil, welches U-förmig, C-förmig, trapez-förmig oder V-förmig ausgebildet ist. Bei einem U-förmig ausgebildeten Kanalquerschnitt verfügt der Kanal über zwei parallel zueinander verlaufende ebene Seitenflächen. Das Filtermedium kann durch die definierte Lage der Seitenflächen besonders einfach an einem Kanalkörper oder an den benachbarten Bereichen des Filtermediums befestigt werden. Dieser Befestigungsvorgang kann sowohl in Handarbeit, als auch automatisiert erfolgen. Die parallelen Seiten können durch eine ebene Seite oder durch eine gewölbte Seite verbunden sein. Bei der Verwendung einer gewölbten Seite kann die Außenwölbung des gesamten Filterelementes mitgebildet werden, um so einen kontinuierlichen Umfang zu bilden.

Bei der V-förmigen oder trapez-förmigen Ausbildung des Kanalquerschnitts verlaufen die ebenen Seitenflächen geneigt zueinander, wobei der eingeschlossene Winkel vorzugsweise ein spitzer Winkel ist. Die geöffnete Seite ist vorzugsweise die Seite mit dem größeren Abstand zwischen den Seitenflächen. Kommuniziert die geöffnete Seite mit dem Filterinneren, kann die Luft besser in den Kanal einströmen. Ist die geöffnete Seite nach außen orientiert, so kann ein in dem Kanal verlaufender Stutzen einfacher montiert werden.

Bei einer alternativen Ausgestaltung ist die geöffnete Seite die Seite mit dem geringeren Abstand. Somit erweitert sich der Kanal mit zunehmender Tiefe. Dies ist besonders dann vorteilhaft, wenn ein Stutzen bei der Montage eingeklipst wird und so eine aufwändige Befestigung des Stutzens im Kanal vermieden werden kann. Hierbei sind ist es vorteilhaft, wenn der Kanal über reversibel verformbare Bereiche verfügt, welche wieder in ihre Ausgangslage zurückfedern. Diese verformbaren Bereiche können in den Seitenflächen oder in der geschlossenen Verbindungsseite vorgesehen sein. Diese Ausführung ist ebenfalls bei einem C-förmig ausgestalteten Kanal vorteilhaft.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine isometrische Ansicht einer Filtereinrichtung mit Gehäuse und Sensorik,
- Fig. 2: eine isometrische Ansicht eines Filterelements mit der Sensorik, jedoch ohne das Gehäuse der Filtereinrichtung,
- Fig. 3: eine isometrische Ansicht des Filterelements bei einer anderen Ausführungsform,
- Fig. 4: eine Axialansicht des Filterelements aus Fig. 3,
- Fig. 5: ein halber Längsschnitt des Filterelements aus Fig. 3,
- Fig. 6: eine isometrische Ansicht eines Filterelements bei einer weiteren Ausführungsform,
- Fig. 7: einen Querschnitt des Filterelements aus Fig. 6,
- Fig. 8: eine auseinander gezogene, isometrische Ansicht mehrerer Komponenten des Filterelements aus Fig. 6,
- Fig. 9: eine isometrische Ansicht eines Filterelements bei einer weiteren Ausführungsform,
- Fig. 10: ein Querschnitt des Filterelements aus Fig. 9,
- Fig. 11: eine isometrische Ansicht eines Filterkörpers des Filterelements aus Fig. 9,
- Fig. 12: eine isometrische Ansicht eines Filterelements bei einer anderen Ausführungsform,
- Fig. 13: ein Querschnitt des Filterelements aus Fig. 12,
- Fig. 14: eine isometrische Ansicht eines Filterkörpers des Filterelements aus Fig. 12,
- Fig. 15: eine isometrische Ansicht eines Filterelements bei einer weiteren Ausführungsform,
- Fig. 16: eine isometrische Ansicht einer Baugruppe des Filterelements aus Fig. 15,
- Fig. 17: eine isometrische Ansicht einer anderen Ausführungsform der Baugruppe des Filterelements aus Fig. 15,
- Fig. 18: eine weitere isometrische Ansicht eines Filterelements bei einer nochmals anderen Ausführungsform,
- Fig. 19: eine isometrische Ansicht einer Baugruppe des Filterelements aus Fig. 18,
- Fig. 20: eine isometrische Ansicht einer anderen Ausführungsform der Baugruppe des Filterelements aus Fig. 18.

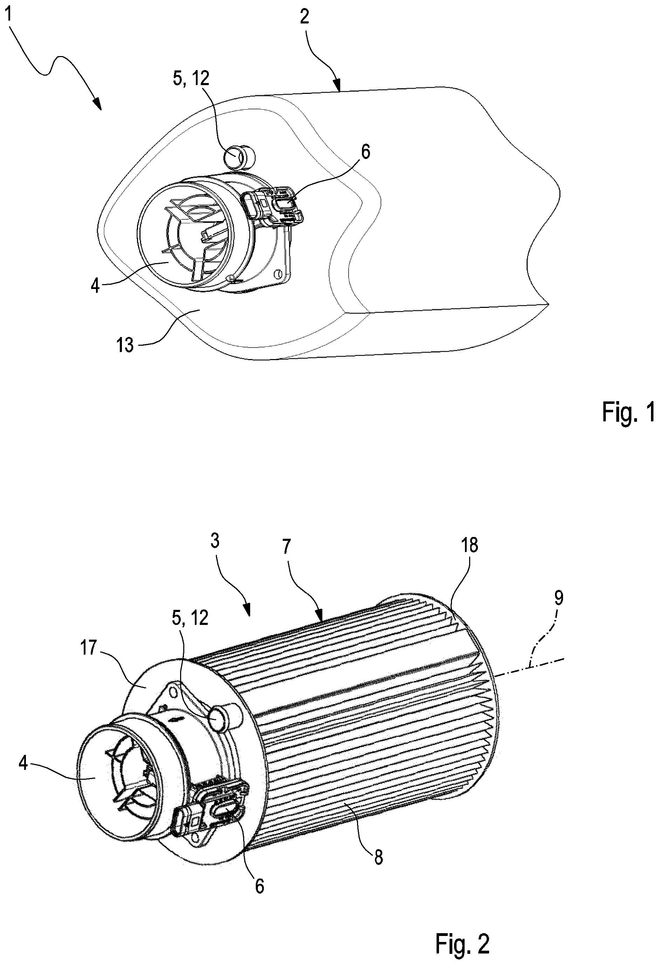

Entsprechend Fig. 1 umfasst eine Filtereinrichtung 1 zum Filtern eines Fluids ein Gehäuse 2, in dem gemäß Fig. 2 ein Filterelement 3 angeordnet ist. Bei einer bevorzugten Anwendung handelt es sich bei der Filtereinrichtung 1 um eine Luftfiltereinrichtung, die zum Einbau in eine Frischluftanlage einer Brennkraftmaschine geeignet ist und vorzugsweise bei einem Kraftfahrzeug zur Anwendung kommt. Zweckmäßig kann am Gehäuse 2 ein Primäranschluss 4 zum Abführen von Primärluft angeordnet sein, die Brennräumen der Brennkraftmaschine zugeführt wird. Außerdem weist das Gehäuse 2 einen Sekundäranschluss 5 auf, über den Sekundärluft entnommen werden kann, um sie einem Hilfsaggregat der Brennkraftmaschine oder des damit ausgestatteten Fahrzeugs zuführen zu können. Bspw. wird die Sekundärluft einem Brenner zugeführt, der in einer Abgasanlage der Brennkraftmaschine zum Aufheizen von Abgasbehandlungskomponenten verwendet werden kann.

Die Filtereinrichtung 1 ist hier außerdem mit einer Sensorik 6 ausgestattet, mit deren Hilfe die aus dem Primäranschluss 4 austretende Luftmenge oder Luftmasse gemessen werden kann. Die gemessene Luftmenge bildet einen wichtigen Parameter für die Steuerung der Brennkraftmaschine. Erkennbar ist die Sensorik 6 hier unmittelbar am Primäranschluss 4 angeordnet. Es ist daher wichtig, die Sekundärluft so abzunehmen, dass sie keinen wesentlichen Einfluss auf den Messwert der Sensorik 6 besitzt.

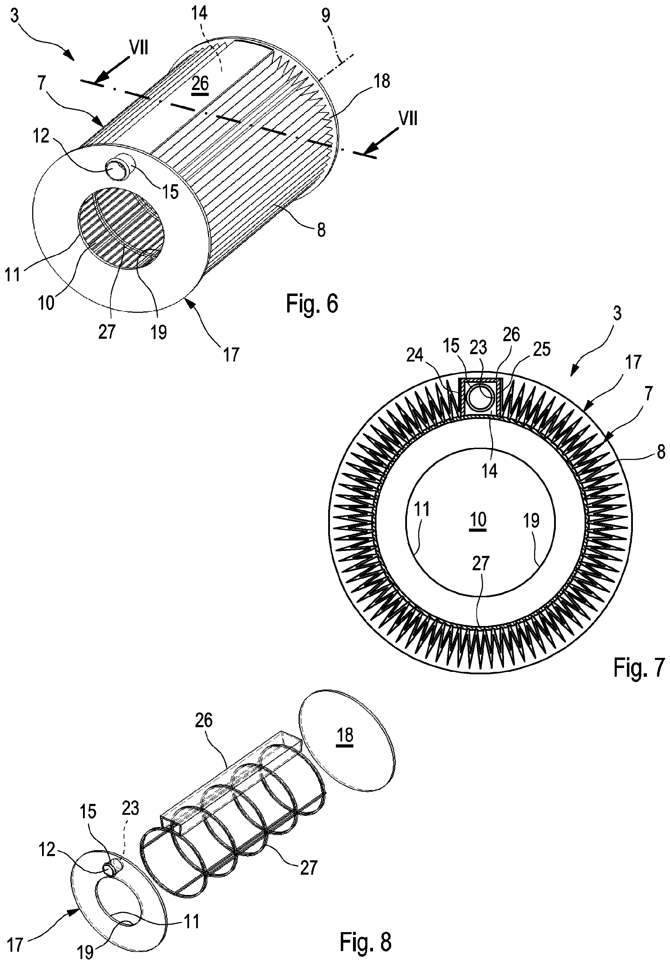

Entsprechend den Figuren 2 bis 20 umfasst das Filterelement 3 einen ringförmigen Filterkörper 7 aus einem Filtermaterial 8. Der Filterkörper 7 besitzt somit eine Längsmittelachse 9. Bzgl. dieser Längsmittelachse 9 umschließt der Filterkörper 7 in der Umfangsrichtung einen Innenraum 10. Das Filterelement 7 ist mit einem Hauptanschluss 11 ausgestattet, der mit dem Innenraum 10 fluidisch verbunden ist. Bei in das Gehäuse 2 eingesetztem Filterelement 7 ist dieser Hauptanschluss 11 mit dem Primäranschluss 4 fluidisch verbunden. Bspw. besitzt der Primäranschluss 4 einen axialen Stutzen, der beim Montieren des Filterelements 7 axial in den Hauptanschluss 11 eintaucht.

Des Weiteren ist das Filterelement 7 mit einem Nebenanschluss 12 ausgestattet, der ebenfalls mit dem Innenraum 10 fluidisch verbunden ist. Dementsprechend sind Hauptanschluss 11 und Nebenanschluss 12 parallel an den Innenraum 10 angeschlossen. Im montierten Zustand ist der Nebenanschluss 12 mit dem Sekundäranschluss 5 fluidisch verbunden. Im gezeigten Beispiel der Fig. 1 bildet der Nebenanschluss 12 selbst den Sekundäranschluss 5, wozu der Nebenanschluss 12 stutzenförmig ausgestaltet ist und durch eine Stirnwand 13 des Gehäuses 2 hindurchgeführt ist.

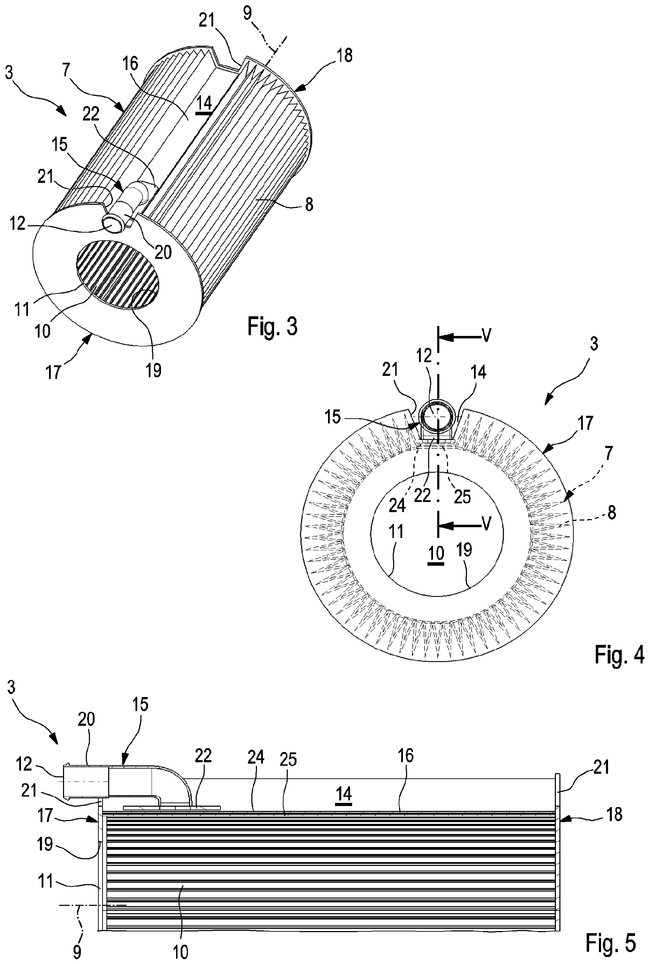

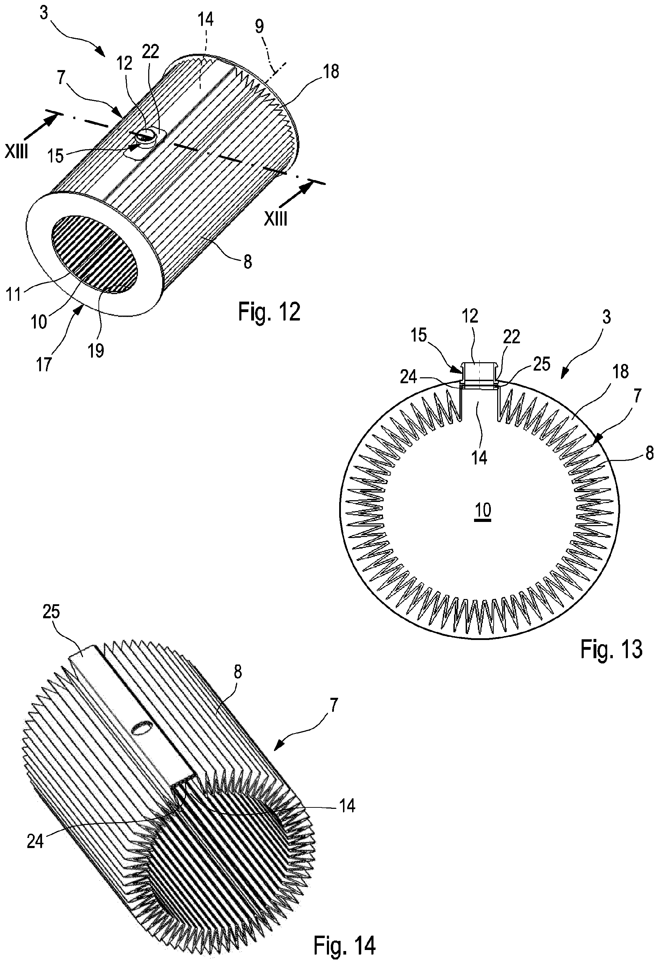

Der Filterkörper 7 ist außerdem mit einem Kanal 14 ausgestattet, der sich axial, also parallel zur Längsmittelachse 9 des Filterkörpers 7 erstreckt. Der Kanal 14 ist radial, also quer zur Längsmittelachse 9 einseitig offen. Ferner ist der Kanal 14 so in den Filterkörper 7 integriert, dass er eine durch das ringförmig angeordnete Filtermaterial 8 gebildete Ringkontur des Filterkörpers 7 in der Umfangsrichtung unterbricht. Der Nebenanschluss 12 ist nun im Bereich dieses Kanals 14 angeordnet. Insbesondere ist der Nebenanschluss 12 somit durch den Kanal 14 mit dem Innenraum 10 fluidisch verbunden. Dies kann bei einem radial nach außen offenen Kanal 14, wie er bspw. in den Figuren 3 bis 5, 9 bis 11 und 15 bis 17 wiedergegeben ist, dadurch erfolgen, dass ein Stutzen 15 des Nebenanschlusses 12 im Kanal 14 positioniert ist und durch einen Kanalboden 16 hindurch mit dem Innenraum 10 fluidisch verbunden ist. Bei einem radial nach innen offenen Kanal 14, wie er bspw. in den Figuren 2, 6 bis 8, 12 bis 14 und 18 bis 20 dargestellt ist, kann die fluidische Verbindung des Nebenanschlusses 12 mit dem Innenraum 10 durch den Kanal 14 dadurch erfolgen, dass der nach innen offene Kanal 14 selbst unmittelbar fluidisch mit dem Innenraum 10 verbunden ist und dass der Nebenanschluss 12 auf geeignete Weise fluidisch an den Kanal 14 angeschlossen ist. Dies kann bspw. axial, wie z. B. in den Figuren 2 und 6 bis 8, oder radial erfolgen, wie z. B. in den Figuren 12 bis 14 und 18 bis 20.

Zweckmäßig weist das Filterelement 3 zwei Endscheiben 17,18 auf, die im Folgenden auch als erste Endscheibe 17 und zweite Endscheibe 18 bezeichnet werden und die den Filterkörper 7 an entgegengesetzt axialen Stirnseiten axial begrenzen. Bspw. wird hierzu das Filtermaterial 8 mit den Endscheiben 17,18 verklebt oder verschweißt oder plastifiziert. Bei den hier gezeigten Ausführungsformen ist der Hauptanschluss 11 jeweils an der ersten Endscheibe 17 ausgebildet. Zweckmäßig ist die erste Endscheibe 17 hierzu als offene Endscheibe konfiguriert, die eine zentrale Durchgangsöffnung 19 aufweist, die den Hauptanschluss 11 bildet. Die offene erste Endscheibe 17 kann auch als Ringscheibe 17 bezeichnet werden. Bei diesen Ausführungsformen kann die zweite Endscheibe 18 als geschlossene Endscheibe konzipiert sein, die keine zentrale Öffnung besitzt, die mit dem Innenraum 10 verbunden ist.

Bei der in den Figuren 2 und 6 bis 8 gezeigten Ausführungsformen ist der Nebenanschluss 12 an derselben Endscheibe, nämlich an der ersten Endscheibe 17 ausgebildet wie der Hauptanschluss 11. In diesem Fall ist der Nebenanschluss 12 bzgl. der Längsmittelachse 9 exzentrisch an der ersten Endscheibe 17 angeordnet. Bei diesen Ausführungsformen der Figuren 2 und 6 bis 8 ist der Kanal 14 radial nach innen, also zum Innenraum 10 hin offen und der Nebenanschluss 12 ist an der ersten Endscheibe 17 so ausgebildet, dass er durch die erste Endscheibe 17 hindurch axial mit dem Kanal 14 fluidisch verbunden ist.

Bei den Ausführungsformen der Figuren 3 bis 5 und 9 bis 20 ist der Nebenanschluss 12 axial zwischen axialen Längsenden des Kanals 14 durch den Kanalboden 16 hindurch radial mit dem Innenraum 10 fluidisch verbunden. Zur Realisierung des Nebenanschlusses 12 wird hierbei der zuvor genannte Stutzen 15 verwendet. Dieser Stutzen 15 kann ein vom Kanalboden 16 entferntes Anschlussende 20 aufweisen, das bei der in den Figuren 3 bis 5 gezeigten Ausführungsform axial orientiert ist und durch eine Aussparung 21, die in der ersten Endscheibe 17 ausgebildet ist, axial hindurchgeführt ist. Insoweit ist auch hier der Nebenanschluss 12 im Bereich der ersten Endscheibe 17 angeordnet. Es ist klar, dass bei einer anderen Ausführungsform der Stutzen 15 mit seinem axial orientierten Anschlussende 20 durch eine entsprechende Aussparung 21 der zweiten Endscheibe 18 hindurchgeführt sein kann, sodass dann der Nebenanschluss 12 im Bereich der zweiten Endscheibe 18 angeordnet ist.

Der Stutzen 15 besitzt bei den Ausführungsformen der Figuren 3 bis 20 außerdem ein am Kanal 14 angeordnetes Kanalende 22, mit dem der Stutzen 15 am Kanalboden 16 befestigt ist und durch das der Stutzen 15 durch den Kanalboden 16 hindurch mit dem Innenraum 10 verbunden ist. Im Unterschied dazu ist bei den in den Figuren 2 und 6 bis 8 gezeigten Ausführungsformen der Stutzen 15 unmittelbar an der ersten Endscheibe 17 angeordnet bzw. integral daran ausgeformt, sodass der Stutzen 15 durch eine in der ersten Endscheibe 17 ausgebildete exzentrische Öffnung 23 hindurch mit dem Kanal 14 verbunden ist. Es ist klar, dass auch bei dieser Bauweise der Nebenanschluss 12 an der zweiten Endscheibe 18 auf entsprechende Weise realisiert werden kann.

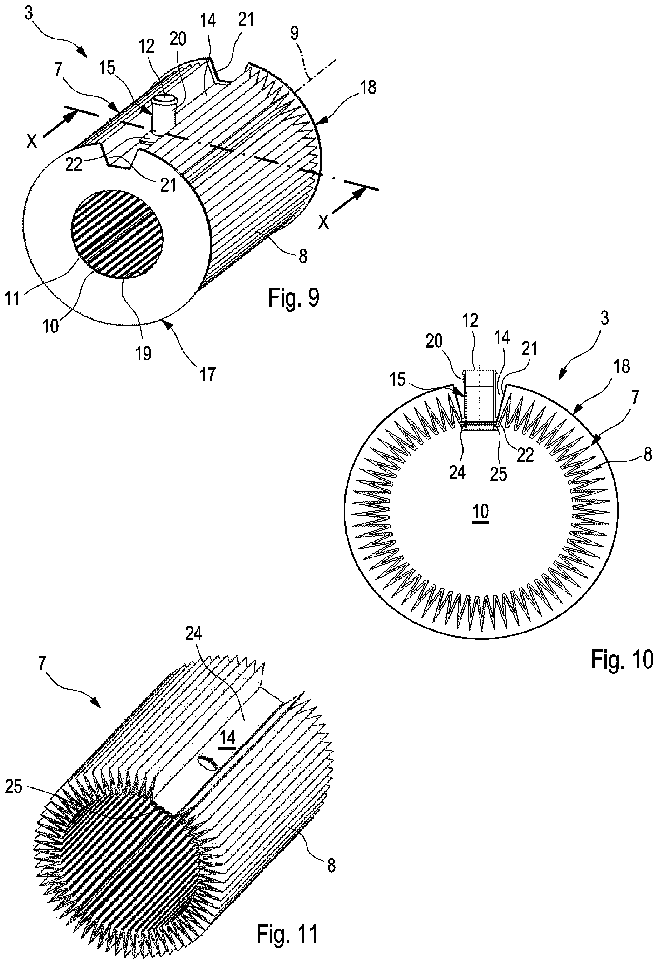

Bei den Ausführungsformen der Figuren 9 bis 20 ist das Anschlussende 20 des Stutzens 15 bzgl. der Längsmittelachse 9 radial orientiert, wodurch der Stutzen 15 einen vergleichsweise einfachen Aufbau aufweist. In diesen Fällen ist der Stutzen 15 als geradliniger Stutzen 15 konzipiert. Im Unterschied dazu ist der Stutzen bei der Ausführungsform gemäß den Figuren 3 bis 5 als abgewinkelter Stutzen 15 konzipiert.

Gemäß den Figuren 2 bis 14 kann der Kanal 14 unmittelbar durch das Filtermaterial 8 gebildet sein. Bspw. handelt es sich beim Filtermaterial 8 um ein gefaltetes Bahnenmaterial, das herstellungsbedingt in der Umfangsrichtung 2 Endfalten 24,25 aufweist, die aneinander befestigt werden müssen, um den Filterkörper 7 in der Umfangsrichtung zu schließen. Zweckmäßig können die beiden Endfalten 24,25 hierzu bzgl. eines Kreises, dessen Mittelpunkt auf der Längsmittelachse 9 liegt, tangential ausgerichtet sein und flächig aneinander anliegen und aneinander befestigt sein. Hierdurch bilden die aneinander befestigen, tangential ausgerichteten Endfalten 24,25 den Kanalboden 16.

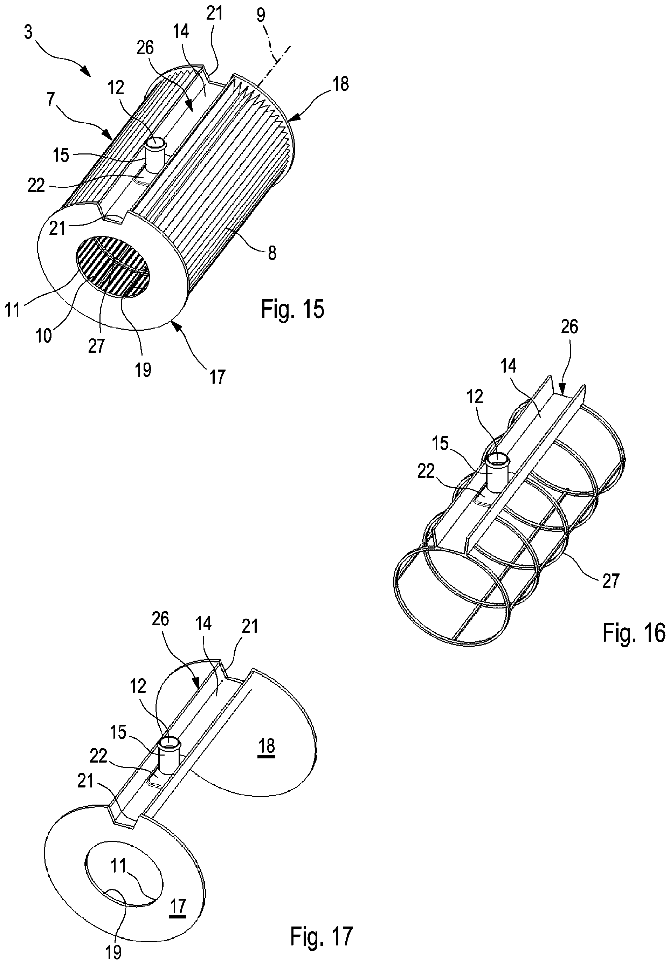

Bei den Ausführungsformen der Figuren 15 bis 20 ist zur Realisierung des Kanals 14 ein Kanalkörper 26 vorgesehen, der bzgl. des Filtermaterials 8 ein separates Bauteil ist. Der Kanalkörper 26 formt den Kanal 14 und besitzt dementsprechend ein radial offenes Querschnittsprofil, bei dem es sich im Wesentlichen um ein U-Profil handeln kann. Der Nebenanschluss 12 kann nun durch den Kanalkörper 26 hindurch radial mit dem Innenraum 10 fluidisch verbunden sein.

Das Filtermaterial 8 kann nun, insbesondere für den Fall, dass es sich dabei um ein gefaltetes Bahnenmaterial handelt, den Kanalkörper 26 an einer dem Innenraum 10 zugewandten Innenseite auskleiden oder an einer vom Innenraum 10 abgewandten Außenseite umschließen. Mit anderen Worten, der Kanalkörper 26 kann einen bereits durch das Filtermaterial 8 vorgeformten, kanalförmigen Aufnahmeschacht von innen, wenn der Kanal 14 nach innen offen ist, oder von außen, wenn der Kanal 14 nach außen offen ist, aussteifen, indem der Kanalkörper 26 in den durch das Filtermaterial 8 vorgeformten, kanalförmigen Aufnahmeschacht eingesetzt wird.

Alternativ dazu kann der Kanalkörper 26 auch in der Umfangsrichtung zwischen Umfangsenden des Filtermaterials 8 angeordnet sein, sodass die Umfangsenden des Filtermaterials 8 in der Umfangsrichtung nicht aneinander, sondern jeweils an den Kanalkörper 26 stoßen. Zweckmäßig ist das Filtermaterial 8 im Bereich dieser Umfangsenden am Kanalkörper 26 befestigt. Insoweit bildet der Kanalkörper 26 dann eine Unterbrechung des Filtermaterials 8 in der Umfangsrichtung.

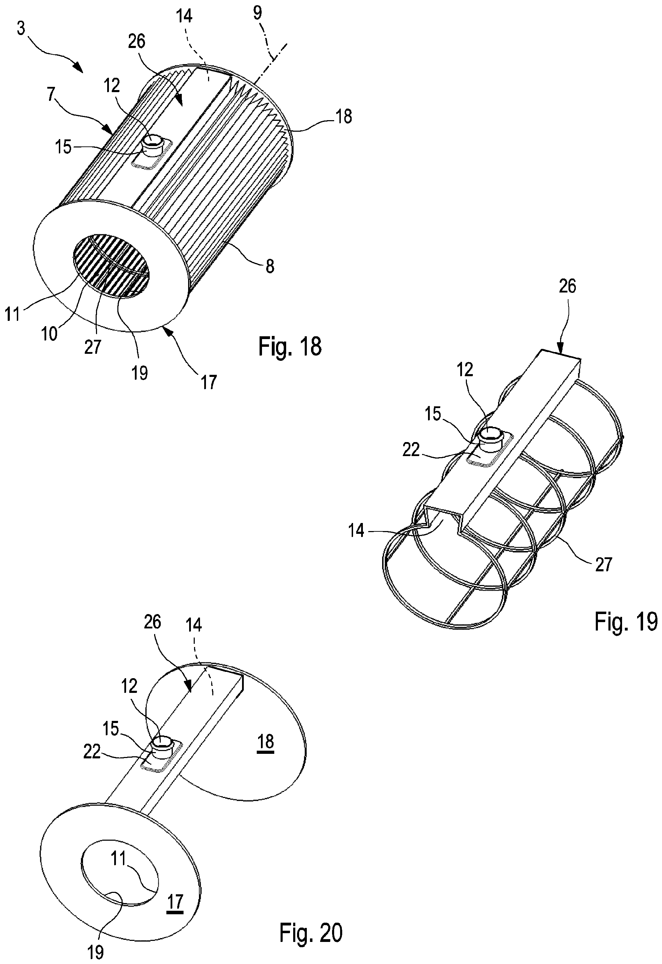

Der Kanalkörper 26 kann gemäß den Figuren 16 und 19 an einer Innenzarge 27 des Filterelements 3 integral ausgeformt sein. Eine derartige Innenzarge 27 ermöglicht eine Abstützung des Filtermaterials 8 bzw. des Filterkörpers 7 radial von innen. Durch die Integralbauweise vereinfacht sich die Realisierung des Kanalkörpers 26.

Alternativ dazu kann gemäß den Figuren 17 und 20 der Kanalkörper 26 auch integral mit wenigstens einer der beiden Endscheiben 17,18 oder - wie gezeigt - mit beiden Endscheiben 17,18 integral ausgeformt sein. Ebenso kann der Kanalkörper 26 mit wenigstens einer der beiden Endscheiben 17, 18 und der Innenzarge 27 integral ausgeformt sein.

Entsprechend einer weiteren alternativen Ausführungsform kann der Kanalkörper 26 auch bzgl. der Innenzarge 27 - soweit vorhanden - und bzgl. der Endscheiben 17,18 ein separates Bauteil sein.

Besonders zweckmäßig ist eine Ausführungsform, bei welcher der Nebenanschluss 12 bzw. sein Stutzen 15 integral am Kanalkörper 26 ausgeformt ist. Hierdurch vereinfacht sich die Realisierung des mit dem Nebenanschluss 12 ausgestatteten Kanalkörpers 26. Insbesondere erleichtert es die dichte Anbindung des Anschlussstutzens 15 durch den Kanalkörper 26 hindurch. Ebenfalls ist es möglich, den Stutzen 15 bzgl. des Kanalkörpers 26 als separates Bauteil zu konzipieren.

## Patentansprüche

1. Filterelement für eine Filtereinrichtung (1) zum Filtern eines Fluids,
- mit einem ringförmigen Filterkörper (7) aus einem Filtermaterial (8), der einen Innenraum (10) in Umfangsrichtung umschließt,
- mit zwei Endscheiben (17, 18), die den Filterkörper (7) an entgegengesetzten axialen Stirnseiten axial begrenzen,
- mit einem Hauptanschluss (11) an einer der Endscheiben (17, 18), der mit dem Innenraum (10) fluidisch verbunden ist und durch den gereinigtes Fluid aus dem Innenraum (10) abführbar ist,
- wobei der Filterkörper (7) einen Kanal (14) aufweist, der sich axial erstreckt und radial offen ist,
- und der eine durch das ringförmig angeordnete Filtermaterial (8) gebildete Ringkontur des Filterkörpers (7) in der Umfangsrichtung unterbricht,
**gekennzeichnet durch**
einen Nebenanschluss (12), der mit dem Innenraum (10) fluidisch verbunden ist, durch den zusätzlich zum Hauptanschluss (11) gereinigtes Fluid aus dem Innenraum (10) abführbar ist und der im Bereich des Kanals (14) angeordnet ist.

2. Filterelement nach Anspruch 1,
**dadurch gekennzeichnet,**
**dass** eine der Endscheiben (17) eine zentrale Öffnung (19) aufweist, die den Hauptanschluss (11) bildet.

3. Filterelement nach Anspruch 1 oder 2,
**dadurch gekennzeichnet,**
- **dass** der Nebenanschluss (12) durch den Kanal (14) mit dem Innenraum (10) fluidisch verbunden ist.

4. Filterelement nach Anspruch 1, 2 oder 3,
**dadurch gekennzeichnet,**
- **dass** der Hauptanschluss (11) und der Nebenanschluss (12) an derselben Endscheibe (17) ausgebildet sind.

5. Filterelement nach einem der Ansprüche 1 bis 4,
**dadurch gekennzeichnet,**
- **dass** der Kanal (14) radial nach innen offen ist,
- **dass** der Nebenanschluss (12) an einer der Endscheiben (17) ausgebildet ist und durch diese Endscheibe (17) hindurch axial mit dem Kanal (14) fluidisch verbunden ist.

6. Filterelement nach Anspruch 1, 2 oder 3,
**dadurch gekennzeichnet,**
**dass** der Nebenanschluss (12) axial zwischen Längsenden des Kanals (14) durch einen den Innenraum (10) begrenzenden Kanalboden (16) hindurch radial mit dem Innenraum (10) fluidisch verbunden ist.

7. Filterelement nach Anspruch 6,
**dadurch gekennzeichnet,**
**dass** der Nebenanschluss (12) ein vom Kanalboden (16) entferntes Anschlussende (20) aufweist, das radial orientiert ist.

8. Filterelement nach Anspruch 6,
**dadurch gekennzeichnet,**
- **dass** der Nebenanschluss (12) ein vom Kanalboden (16) entferntes Anschlussende (20) aufweist, das axial orientiert ist,
- **dass** der Kanal (14) radial nach außen offen ist,
- **dass** das Anschlussende (20) durch eine Aussparung (21) axial hindurchgeführt ist, die in einer den Filterkörper (7) axial begrenzenden Endscheibe (17,18) ausgebildet ist.

9. Filterelement nach einem der Ansprüche 1 bis 8,
**dadurch gekennzeichnet,**
**dass** der Kanal (14) unmittelbar durch das Filtermaterial (8) gebildet ist.

10. Filterelement nach einem der Ansprüche 1 bis 8,
**dadurch gekennzeichnet,**
**dass** der Kanal (14) durch einen Kanalkörper (26) gebildet ist, der ein radial offenes Querschnittsprofil besitzt.

11. Filterelement nach Anspruch 10,
**dadurch gekennzeichnet,**
**dass** der Nebenanschluss (12) durch den Kanalkörper (26) hindurch radial mit dem Innenraum (10) fluidisch verbunden ist.

12. Filterelement nach Anspruch 10 oder 11,
**dadurch gekennzeichnet,**
- **dass** das Filtermaterial (8) den Kanalkörper (26) an einer dem Innenraum (10) zugewandten Innenseite auskleidet oder an einer vom Innenraum (10) abgewandten Außenseite umschließt, oder
- **dass** der Kanalkörper (26) in Umfangsrichtung zwischen Umfangsenden des Filtermaterials (8) angeordnet ist, wobei das Filtermaterial (8) im Bereich dieser Umfangsenden am Kanalkörper (26) befestigt ist.

13. Filterelement nach einem der Ansprüche 10 bis 12,
**dadurch gekennzeichnet,**
**dass** der Kanalkörper (26) integral an einer Innenzarge (27) ausgeformt ist, an der sich das Filtermaterial (8) radial innen abstützt, und/oder integral an wenigstens einer Endscheibe (17,18) ausgeformt ist, die den Filterkörper (7) axial begrenzt.

14. Filterelement nach einem der Ansprüche 1 bis 13,
**dadurch gekennzeichnet,**
- **dass** der Nebenanschluss (12) als Stutzen (15) ausgestaltet ist, der integral am Kanalkörper (26) ausgeformt sein kann oder als separates Bauteil ausgestaltet sein kann, das an den Kanalkörper (26) oder an das Filtermaterial (8) angebaut ist, und/oder
- **dass** das Filtermaterial (8) ein gefaltetes Bahnenmaterial ist, wobei der Kanal (14) im Bereich von Endfalten (24,25) des Filtermaterials (8) angeordnet ist.

## Claims

1. Filter element for a filter device (1) for filtering a fluid,
- having an annular filter body (7) made of a filter material (8), which surrounds an inner chamber (10) in circumferential direction,
- having two end discs (17, 18), which limit axially the filter body (7) at opposite axial end faces,
- having a main connection (11) on one of the end discs (17, 18), which is fluidically connected with the inner chamber (10) and through which cleaned fluid can be discharged out of the inner chamber (10),
- wherein the filter body (7) has a channel (14) which extends axially and is radially open, and which interrupts an annular contour, formed by the annularly disposed filter material (8), of the filter body (7) in the circumferential direction,
**characterised by**
an auxiliary connection (12) which is fluidically connected with the inner chamber (10), through which additionally to the main connection (11) cleaned fluid can be discharged out of the inner chamber (10), and which is disposed in the region of the channel (14).

2. Filter element according to claim 1,
**characterised in**
**that** one of the end discs (17) has a central opening (19) which forms the main connection (11).

3. Filter element according to claim 1 or 2,
**characterised in**
- **that** the auxiliary connection (12) is fluidically connected by the channel (14) with the inner chamber (10).

4. Filter element according to claim 1, 2 or 3,
**characterised in**
- **that** the main connection (11) and the auxiliary connection (12) are formed on the same end disc (17).

5. Filter element according to any of claims 1 to 4,
**characterised in**
- **that** the channel (14) is radially open to the interior,
- **that** the auxiliary connection (12) is formed on one of the end discs (17) and is fluidically connected through this end disc (17) axially with the channel (14).

6. Filter element according to claim 1, 2 or 3,
**characterised in**
**that** the auxiliary connection (12) is fluidly connected axially between longitudinal ends of the channel (14) through a channel floor (16) delimiting the inner chamber (10) radially with the inner chamber (10).

7. Filter element according to claim 6,
**characterised in**
**that** the auxiliary connection (12) has a connection end (20) distanced from the channel floor (16), which connection end is radially oriented.

8. Filter element according to claim 6,
**characterised in**
- **that** the auxiliary connection (12) has a connection end (20) distanced from the channel floor (16), which connection end is axially oriented,
- **that** the channel (14) is radially open to the outside,
- **that** the connection end (20) is guided axially through a gap (21) which is formed in an end disc (17, 18) axially delimiting the filter body (7).

9. Filter element according to any of claims 1 to 8,
**characterised in**
**that** the channel (14) is formed directly by the filter material (8).

10. Filter element according to any of claims 1 to 8,
**characterised in**
**that** the channel (14) is formed by a channel body (26) which has a radially open cross-sectional profile.

11. Filter element according to claim 10,
**characterised in**
**that** the auxiliary connection (12) is fluidically connected through the channel body (26) radially with the inner chamber (10).

12. Filter element according to claim 10 or 11,
**characterised in**
- **that** the filter material (8) lines the channel body (26) on an inner side facing the inner chamber (10) or encloses it on an outer side facing away from the inner chamber (10), or
- **that** the channel body (26) is disposed in circumferential direction between circumferential ends of the filter material (8), wherein the filter material (8) is fastened on the channel body (26) in the region of these circumferential ends.

13. Filter element according to any of claims 10 to 12,
**characterised in**
**that** the channel body (26) is integrally formed on an inner frame (27) on which the filter material (8) is supported radially on the inside, and/or is integrally formed on at least one end disc (17, 18) which delimits the filter body (7) axially.

14. Filter element according to any of claims 1 to 13,
**characterised in**
- **that** the auxiliary connection (12) is in the form of a column (15) which can be integrally formed on the channel body (26) or be formed as a separate component, which is mounted on the channel body (26) or on the filter material (8), and/or
- **that** the filter material (8) is a folded sheet material, wherein the channel (14) is disposed in the region of end pleats (24, 25) of the filter material (8).

## Revendications

1. Élément filtrant pour un dispositif de filtration (1) pour le filtrage d'un fluide,
- avec un corps de filtre annulaire (7) en un matériau filtrant (8), qui entoure un espace intérieur (10) dans la direction circonférentielle,
- avec deux disques d'extrémité (17, 18), qui délimitent axialement le corps de filtre (7) au niveau de côtés frontaux axiaux opposés,
- avec un raccord principal (11) au niveau d'un des disques d'extrémité (17, 18), qui est relié fluidiquement à l'espace intérieur (10) et peut être évacué de l'espace intérieur (10) par le fluide épuré,
- dans lequel le corps de filtre (7) présente un canal (14), qui s'étend axialement et est ouvert radialement et qui interrompt un contour annulaire du corps de filtre (7) formé par le matériau filtrant (8) agencé de façon annulaire dans la direction circonférentielle,
**caractérisé par**
un raccord secondaire (12), qui est relié fluidiquement à l'espace intérieur (10), par lequel en plus du raccord principal (11) du fluide épuré peut être évacué de l'espace intérieur (10) et qui est agencé dans la zone du canal (14).

2. Élément filtrant selon la revendication 1,
**caractérisé en ce**
**qu'**un des disques d'extrémité (17) présente une ouverture centrale (19), qui forme le raccord principal (11).

3. Élément filtrant selon la revendication 1 ou 2,
**caractérisé en ce**
- **que** le raccord secondaire (12) est relié fluidiquement à l'espace intérieur (10) par le canal (14).

4. Élément filtrant selon la revendication 1, 2 ou 3,
**caractérisé en ce**
- **que** le raccord principal (11) et le raccord secondaire (12) sont reliés au même disque d'extrémité (17).

5. Élément filtrant selon l'une quelconque des revendications 1 à 4,
**caractérisé en ce**
- **que** le canal (14) est ouvert radialement vers l'intérieur,
- **que** le raccord secondaire (12) est réalisé au niveau d'un des disques d'extrémité (17) et est relié fluidiquement axialement au canal (14) à travers ce disque d'extrémité (17).

6. Élément filtrant selon la revendication 1, 2 ou 3,
**caractérisé en ce**
**que** le raccord secondaire (12) est relié fluidiquement radialement à l'espace intérieur (10) axialement entre des extrémités longitudinales du canal (14) à travers un fond de canal (16) délimitant l'espace intérieur (10).

7. Élément filtrant selon la revendication 6,
**caractérisé en ce**
**que** le raccord secondaire (12) présente une extrémité de raccord (20) éloignée du fond de canal (16), qui est orientée radialement.

8. Élément filtrant selon la revendication 6,
**caractérisé en ce**
- **que** le raccord secondaire (12) présente une extrémité de raccord (20) éloignée du fond de canal (16), qui est orientée axialement,
- **que** le canal (14) est ouvert radialement vers l'extérieur,
- **que** l'extrémité de raccord (20) est guidée axialement à travers un évidement (21), qui est réalisé dans un disque d'extrémité (17, 18) délimitant axialement le corps de filtre (7).

9. Élément filtrant selon l'une quelconque des revendications 1 à 8,
**caractérisé en ce**
**que** le canal (14) est formé directement par le matériau filtrant (8).

10. Élément filtrant selon l'une quelconque des revendications 1 à 8,
**caractérisé en ce**
**que** le canal (14) est formé par un corps de canal (26), qui dispose d'un profil de section transversale radialement ouvert.

11. Élément filtrant selon la revendication 10,
**caractérisé en ce**
**que** le raccord secondaire (12) est relié fluidiquement radialement à l'espace intérieur (10) à travers le corps de canal (26).

12. Élément filtrant selon la revendication 10 ou 11,
**caractérisé en ce**
- **que** le matériau filtrant (8) garnit le corps de canal (26) au niveau d'un côté intérieur tourné vers l'espace intérieur (10) ou l'entoure au niveau d'un côté extérieur opposé à l'espace intérieur (10), ou
- **que** le corps de canal (26) est agencé dans la direction circonférentielle entre des extrémités circonférentielles du matériau filtrant (8), dans lequel le matériau filtrant (8) est fixé dans la zone de ces extrémités circonférentielles au niveau du corps de canal (26).

13. Élément filtrant selon l'une quelconque des revendications 10 à 12,
**caractérisé en ce**
**que** le corps de canal (26) est formé d'un seul tenant au niveau d'un châssis intérieur (27), au niveau duquel le matériau filtrant (8) s'appuie radialement à l'intérieur, et/ou est formé d'un seul tenant au niveau d'au moins un disque d'extrémité (17, 18), qui délimite axialement le corps de filtre (7).

14. Élément filtrant selon l'une quelconque des revendications 1 à 13,
**caractérisé en ce**
- **que** le raccord secondaire (12) est configuré en tant qu'embout (15), qui peut être formé d'un seul tenant au niveau du corps de canal (26) ou peut être configuré en tant que composant séparé, qui est rapporté sur le corps de canal (26) ou sur le matériau filtrant (8), et/ou
- **que** le matériau filtrant (8) est un matériau en bande plié, dans lequel le canal (14) est agencé dans la zone de plis d'extrémité (24, 25) du matériau filtrant (8).
